# EUROPEAN PATENT SPECIFICATION

(11) **EP 2 568 526 B1**
(45) Date of publication and mention of the grant of the patent: **21.09.2016**
(21) Application number: 12159610.0
(22) Date of filing: 15.03.2012
(51) Int. Cl.: H01M 10/42

(54) **Battery pack**
Batteriepack
Bloc-batteries

(30) Priority: 09.09.2011 US 201161532910 P; 19.01.2012 US 201213353783
(43) Date of publication of application: 13.03.2013
(73) Proprietor: Samsung SDI Co., Ltd., Giheung-gu Yongin-si, Gyeonggi-do (KR)
(72) Inventor: Park, Seok-Ryun, Gyeonggi-do (KR); Koh, Seok, Gyeonggi-do (KR); Park, Kyung-Ho, Gyeonggi-do (KR)
(74) Representative: Walaski, Jan Filip

(56) References cited:
- US-A1- 2003 071 523
- US-A1- 2007 062 744
- US-A1- 2009 085 553

## Description

The present invention relates to a battery pack. More particularly, the present invention relates to a battery pack with a charge and discharge voltage level that changes according a connected device.

Recently, usage of portable devices such as mobile phones, PDAs (personal digital assistants), netbooks, laptops, etc. has increased. The portable device is supplied with power by using a rechargeable battery pack including a rechargeable battery that can be repeatedly charged and discharged. As the rechargeable battery, a nickel-cadmium battery, a lead-acid battery, a nickel metal hydride battery, a lithium ion battery, and a lithium polymer battery are commercially available. In the lithium-ion battery, a memory effect is not generated, charge and discharge are free, a self discharge ratio is low, and energy density is high such that the lithium-ion battery is advantageous in aspects of reduced size and weight, and is thereby being widely used. In general, battery packs of the portable devices are manufactured with different shapes and battery configurations according to a shape of the used device and an operating voltage. Accordingly, the battery pack of an arbitrary device is not used for a different device. This comparability problem of the battery pack in which a battery pack that may be available cannot be used with other devices generates a waste of resources.

US2009/085553 relates to a configurable battery pack that can switch between parallel and series configurations. US2003/071523 relates to dynamically updating an arrangement of cells in order to adapt the power supplied to a device as its load changes.

According to the invention, there is provided an apparatus according to claim 1. The switches may comprise transistors responsive to control signals from the control means to selectively connect the battery cells to the output terminals of the battery pack.

The battery pack may further comprise a first capacitor C1 connected between first and second battery cells. One of the switches may comprise a switch T2 for bypassing the first capacitor C1 to connect the first and second cells in series.

The switches may include a switching arrangement T1, T3 for connecting the positive terminals of the battery cells to one another and for connecting the negative terminals of the battery cells to one another.

The control means may be arranged to determine whether the battery cells are over-charged or over-discharged.

The battery pack may comprise a second capacitor C2 connected across the output of the battery module, wherein the control means is arranged to measure the voltage across the second capacitor to determine whether the battery cells are over-charged or over-discharged.

The control means may be arranged to store a plurality of charge and discharge comparison voltages for each of a plurality of battery cell configurations.

The battery pack may further comprise a switch unit for selectively connecting and disconnecting an output of the battery module to a battery pack output terminal in dependence on whether the battery cells are over-charged or over-discharged.

The battery pack may further comprise a third capacitor C3 connected between an output of the battery module and the output terminal of the battery pack, wherein the switch unit is arranged to bypass the capacitor when the switch unit is turned on.

The control means may be arranged to detect that the external device is off, and on detecting that the external device is off, may be arranged to control the cells to be connected in parallel for cell balancing.

Embodiments of the present invention provide a battery pack that is capable of changing a voltage level of a charge and a discharge according to a connected device. The battery pack recognizes an operation voltage of a corresponding device according to a unique resistance of a connected device, and couples a plurality of cells in series or in parallel to be suitable for the operation voltage of the corresponding device. A common battery pack that is capable of being used for various devices using voltages of different levels may be provided. Compatibility of the common battery pack is ensured, thereby reducing resource waste.

Embodiments of the invention will now be described by way of example with reference to the accompanying drawings, in which:
FIG. 1 is a circuit diagram of a battery pack according to an exemplary embodiment of the present invention.
FIG. 2 shows a case in which a plurality of cells are coupled in series in a circuit diagram of a battery pack according to an exemplary embodiment of the present invention.
FIG. 3 shows a case in which a plurality of cells are coupled in parallel in a circuit diagram of a battery pack according to an exemplary embodiment of the present invention.

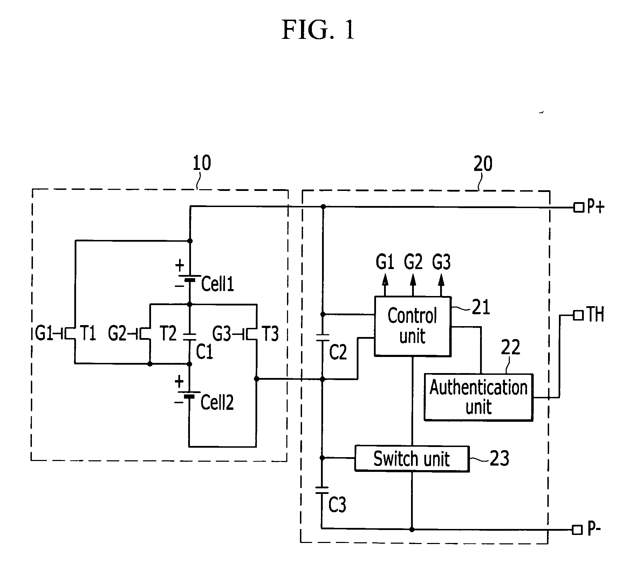

Referring to FIG. 1, a battery pack includes a battery part or module 10 and a control part or module 20.

The battery part 10 includes a plurality of rechargeable batteries. The rechargeable battery (hereinafter referred to as a cell) may be realized by one of a nickel-cadmium battery, a lead-acid battery, a nickel metal hydride battery, a lithium-ion battery, and a lithium polymer battery.

The battery part 10 couples a plurality of cells in series and/or in parallel according to control of the control part 20. Accordingly, the level of a voltage output from the battery part 10 may be variously changed.

Here, the battery part 10 includes two cells Cell1 and Cell2, and a configuration in which the two cells Cell1 and Cell2 are coupled in parallel or in series will be described. However, the battery part 10 may include two or more cells, and the two or more cells may be coupled in series and/or in parallel.

The battery part 10 includes a first cell Celli, a second cell Cell2, a first transistor T1, a second transistor T2, a third transistor T3, and a first capacitor C1.

A positive electrode (+) of the first cell Cell1 is connected to a positive output terminal (P+). A negative electrode (-) of the second cell Cell2 is connected to a negative output terminal (P-) through a switch unit 23. The first cell Cell1 and the second cell Cell2 are connected to an external device through the positive output terminal (P+) and the negative output terminal (P-) to be charged or discharged. The first cell Cell1 and the second cell Cell2 may be a rechargeable battery of the same kind or a different kind.

The first transistor T1 includes a gate terminal applied with a first gate signal G1, one terminal connected to the positive electrode (+) of the first cell Cell1, and the other terminal connected to the positive electrode (+) of the second cell Cell2. If the first gate signal G1 of a gate-on voltage is applied, the first transistor T1 connects the positive electrode (+) of the first cell Cell1 and the positive electrode (+) of the second cell Cell2.

The second transistor T2 includes a gate terminal applied with a second gate signal G2, one terminal connected to a negative electrode (-) of the first cell Cell1, and the other terminal connected to a positive electrode (+) of the second cell Cell2. If the second gate signal G2 of the gate-on voltage is applied, the second transistor T2 connects the negative electrode (-) of the first cell Cell1 and the positive electrode (+) of the second cell Cell2.

The third transistor T3 includes a gate terminal applied with a third gate signal G3, one terminal connected to the negative electrode (-) of the first cell Cell1, and the other terminal connected to the negative electrode (-) of the second cell Cell2. If the third gate signal G3 of the gate-on voltage is applied, the third transistor T3 connects the negative electrode (-) of the first cell Cell1 and the negative electrode (-) of the second cell Cell2.

The first transistor T1, the second transistor T2, and the third transistor T3 may be p-channel field effect transistors or n-channel field effect transistors. The gate-on voltage turning on the p-channel field effect transistor is a voltage of a logic low level and a gate-off voltage turning it off is a voltage of a logic high level. The gate-on voltage turning on the n-channel field effect transistor is a voltage of a logic high level and a gate-off voltage turning it off is a voltage of a logic low level.

The first capacitor C1 includes one terminal connected to the negative electrode (-) of the first cell Cell1 and the other terminal connected to the positive electrode (+) of the second cell Cell2. The first capacitor C1 floats the first cell Cell1 and the second cell Cell2. The first capacitor C1 may function to protect the first transistor T1, the second transistor T2, and the third transistor T3 from a reverse voltage or static electricity from an external device.

The control part 20 includes a second capacitor C2, a third capacitor C3, a control unit 21, an authentication unit 22, and a switch unit 23.

The second capacitor C2 includes one terminal connected to the positive electrode (+) of the first cell Cell1 and the other terminal connected to the negative electrode (-) of the second cell Cell2. The second capacitor C2 is charged with the voltage of the first cell Cell1 and the second cell Cell2. The second capacitor C2 may function to protect the control unit 21 from the reverse voltage or the static electricity from the external device.

The third capacitor C3 includes one terminal connected to the negative electrode (-) of the second cell Cell2 and the other terminal connected to the negative output terminal (P-). The third capacitor C3 floats the negative electrode (-) of the second cell Cell2 and the output terminal (P-).

The control unit 21 has a function of a protection circuit module (PCM) that prevents an overcharge and an over-discharge of the first cell Cell1 and the second cell Cell2 and a battery voltage conversion function coupling the first cell Cell1 and the second cell Cell2 in series and/or in parallel to be adaptive to the operation voltage of the device connected to the positive output terminals (P+, P-).

Firstly, a constitution of the control part 20 for the PCM function will be described.

The control unit 21 is connected to both terminals of the second capacitor C2. The control unit 21 measures the voltage of both terminals of the second capacitor C2 to measure the voltage of the first cell Cell1 and the second cell Cell2. If the voltage range of the first cell Cell1 and the second cell Cell2 is over a predetermined reference range, the control unit 21 transmits a switch control signal to the switch unit 23.

The switch unit 23 is connected to the one terminal and the other terminal of the third capacitor C3. The switch unit 23 connects or disconnects the negative electrode (-) of the second cell Cell2 and the negative output terminal (P-) according to the switch control signal transmitted from the control unit 21.

In detail, the control unit 21 compares the measured voltage of the first cell Celli and the second cell Cell2 under the charge of the first cell Cell1 and the second cell Cell2 with a charge reference voltage to detect whether the first cell Cell1 and the second cell Cell2 are overcharged. For example, if the voltage of the first cell Cell1 and the second cell Cell2 is higher than the charge reference voltage, the control unit 21 transmits a switch control signal to the switch unit 23 such that the current path through which the battery part 10 and the output terminal (P-) are connected is disconnected.

The charge reference voltage includes the first charge reference voltage used in the series connection of the first cell Cell1 and the second cell Cell2 and the second charge reference voltage used in the parallel connection. That is, when the first cell Cell1 and the second cell Cell2 are coupled in series, the control unit 21 compares the measured charge voltage with the first charge reference voltage to detect whether the first cell Cell1 and the second cell Cell2 are overcharged.

Also, when the first cell Cell1 and the second cell Cell2 are coupled in parallel, the control unit 21 compares the measured charge voltage with the second charge reference voltage to detect whether the first cell Cell1 and the second cell Cell2 are overcharged. The first charge reference voltage is a voltage having a higher level than the second charge reference voltage.

The control unit 21 compares the measured voltage of the first cell Cell1 and the second cell Cell2 under the discharge of the first cell Cell1 and the second cell Cell2 with the discharge reference voltage to detect whether the first cell Cell1 and the second cell Cell2 are over-discharged. For example, if the discharge voltage of the first cell Cell1 and the second cell Cell2 is lower than the discharge reference voltage, the control unit 21 transmits the switch control signal to the switch unit 23 such that the current path through which the battery part 10 and the output terminal (P-) are connected is disconnected.

The discharge reference voltage includes the first discharge reference voltage used under the series connection of the first cell Cell1 and the second cell Cell2 and the second discharge reference voltage used under the parallel connection. That is, when the first cell Cell1 and the second cell Cell2 are coupled in series, the control unit 21 compares the measured discharge voltage with the first discharge reference voltage to detect whether the first cell Cell1 and the second cell Cell2 are over-discharged.

Also, when the first cell Cell1 and the second cell Cell2 are coupled in parallel, the control unit 21 compares the measured discharge voltage with the second discharge reference voltage to detect whether the first cell Cell1 and the second cell Cell2 are over-discharged. The first discharge reference voltage is a voltage having the higher level than the second discharge reference voltage.

The switch unit 23 may be made of a field effect transistor connecting and disconnecting the negative electrode (-) of the second cell Cell2 and the output terminal (P-) according to the switch control signal transmitted from the control unit 21. The switch unit 23 may includes the first field effect transistor connecting or disconnecting the charge current under the charge and the second field effect transistor connecting or disconnecting the discharge current under the discharge.

Also, the switch unit 23 may be made of a thermistor connecting or disconnecting the charge current and the discharge current between the negative electrode (-) of the second cell Cell2 and the output terminal (P-) according to the switch control signal transmitted from the control unit 21. The thermistor may be one of a negative temperature coefficient thermistor and a positive temperature coefficient thermistor.

Next, the constitution of the control part 20 to execute the battery voltage conversion function will be described.

The authentication unit 22 measures a unique resistance of a device connected to a unique resistance terminal TH. The unique resistance of the connected device represents a voltage (hereinafter, an operating voltage) that is used by the corresponding device. The authentication unit 22 recognizes the usage of the connected device by using the measured unique resistance. The authentication unit 22 transmits the voltage signal instructing the operation voltage of the connected device to the control unit 21.

For example, a connected device has a preset resistance that corresponds to a resistance stored in a look-up table in the authentication device. By looking up the measured resistance, the operating voltage of the device can be determined.

The control unit 21 generates a first gate signal G1, a second gate signal G2, and a third gate signal G3 to couple the first cell Cell1 and the second cell Cell2 in series or in parallel according to the voltage signal transmitted from the authentication unit 22. The first gate signal G1 is transmitted to the gate terminal of the first transistor T1. The second gate signal G2 is transmitted to the gate terminal of the second transistor T2. The third gate signal G3 is transmitted to the gate terminal of the third transistor T3.

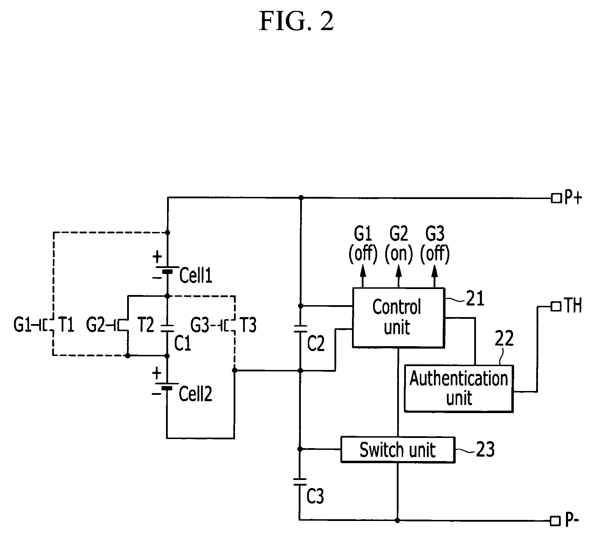

FIG. 2 shows a case in which the first cell Cell1 and the second cell Cell2 are coupled in series.

Referring to FIG. 2, under the series connection of the first cell Cell1 and the second cell Cell2, the control unit 21 generates the second gate signal G2 as the gate-on voltage, and the first gate signal G1 and the third gate signal G3 as the gate-off voltage. Accordingly, the second transistor T2 is turned on, and the first transistor T1 and the third transistor T3 are turned off. According to the turn-on of the second transistor T2, the negative electrode (-) of the first cell Cell1 and the positive electrode (+) of the second cell Cell2 are connected. That is, the first cell Cell1 and the second cell Cell2 are coupled in series.

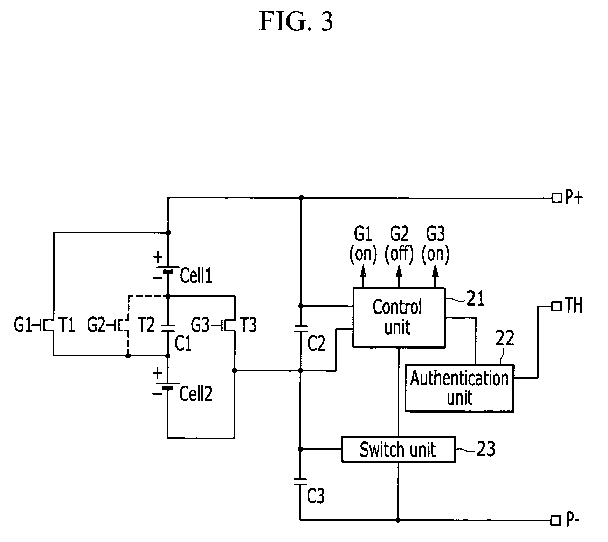

FIG. 3 shows a case in which the first cell Cell1 and the second cell Cell2 are coupled in parallel.

Referring to FIG. 3, under the parallel connection of the first cell Cell1 and the second cell Cell2, the control unit 21 generates the first gate signal G1 and the third gate signal G3 as the gate-on voltage, and the second gate signal G2 as the gate-off voltage. Accordingly, the first transistor T1 and the third transistor T3 are turned on and the second transistor T2 is turned off. According to the turn on of the first transistor T1, the positive electrode (+) of the first cell Cell1 and the positive electrode (+) of the second cell Cell2 are connected. According to the turn-on of the third transistor T3, the negative electrode (-) of the first cell Cell1 and the negative electrode (-) of the second cell Cell2 are connected. That is, the first cell Cell1 and the second cell Cell2 are coupled in parallel.

In a further aspect, when the control module 20 detects that the external device is off, it can arrange for the cells to be connected in parallel to permit cell balancing.

As described above, the provided battery pack recognizes the operating voltage of the corresponding device by using the unique resistance of the connected device, and the discharge voltage may be changed to be adaptive to the operating voltage of the corresponding device. Accordingly, the provided battery pack may be used for various devices using voltages of different levels.

The drawings and the detailed description of the invention given so far are only illustrative, and they are only used to describe the present invention but are not used to limit the meaning or restrict the range of the present invention described in the claims. Therefore, it will be appreciated to those skilled in the art that various modifications may be made and other equivalent embodiments are available. Accordingly, the actual scope of the present invention is determined by the appended claims.

## Claims

1. Apparatus comprising:
a battery pack for providing an output voltage at first and second output terminals, and
an external device powered by the battery pack and being connected to the battery pack via positive, negative and preset resistance terminals,
the battery pack comprising:
a battery module (10) including a plurality of battery cells and a plurality of switches for connecting the cells in series and/or parallel;
a control unit (21) arranged to control the switches so as to change the output voltage of the battery pack in dependence on an operating voltage of the external device;
an authentication unit (22) having a look-up table of resistances and corresponding operating voltages, wherein the external device has a preset resistance that corresponds to a resistance stored in the look-up table; and
a third terminal TH at which the preset resistance of the external device is measured, the third terminal being connected to the authentication unit (22);
wherein the authentication unit (22) is arranged to measure the preset resistance of the external device connected to the third terminal TH, to determine the operating voltage of the external device from the look-up table, and to transmit a signal to the control unit (21) to instruct the control unit of the operating voltage of the external device.

2. The apparatus of claim 1, wherein the switches comprise transistors responsive to control signals from the control unit (21) to selectively connect the battery cells to the output terminals of the battery pack.

3. The apparatus of claim 1, wherein the battery pack further comprises a first capacitor C1 connected between first and second battery cells.

4. The apparatus of claim 3, wherein one of the switches comprises a switch T2 for bypassing the first capacitor C1 to connect the first and second cells in series.

5. The apparatus of any one of the preceding claims, wherein the switches includes a switching arrangement T1, T3 for connecting the positive terminals of the battery cells to one another and for connecting the negative terminals of the battery cells to one another.

6. The apparatus of any one of the preceding claims, wherein the battery pack comprises control means arranged to determine whether the battery cells are over-charged or over-discharged.

7. The apparatus of claim 6, wherein the battery pack comprises a second capacitor C2 connected across the output of the battery module, wherein the control means is arranged to measure the voltage across the second capacitor to determine whether the battery cells are over-charged or over-discharged.

8. The apparatus of claim 6 or 7, wherein the battery pack comprises control means (20) arranged to store a plurality of charge and discharge comparison voltages for each of a plurality of battery cell configurations.

9. The apparatus of claim 6, 7 or 8, wherein the battery pack further comprises a switch unit (23) for selectively connecting and disconnecting an output of the battery module (10) to a battery pack output terminal in dependence on whether the battery cells are over-charged or over-discharged.

10. The apparatus of claim 9, wherein the battery pack further comprises a third capacitor C3 connected between an output of the battery module (10) and the output terminal of the battery pack, wherein the switch unit is arranged to bypass the capacitor when the switch unit is turned on.

11. The apparatus of any one of the preceding claims, wherein the battery pack comprises control means arranged to detect that the external device is off, and on detecting that the external device is off, is arranged to control the cells to be connected in parallel for cell balancing.

## Patentansprüche

1. Vorrichtung umfassend:
ein Batteriepack zur Bereitstellung einer Ausgangsspannung an einer ersten und zweiten Ausgangsklemme; und
ein externes Gerät, das durch das Batteriepack versorgt wird und über positive, negative und voreingestellte Widerstandsklemmen mit dem Batteriepack verbunden ist,
das Batteriepack umfassend:
ein Batteriemodul (10), das eine Mehrheit von Batteriezellen und eine Mehrheit von Schaltern zur Reihen- und/oder Parallelschaltung der Zellen umfasst;
eine Steuereinheit (21), die angeordnet ist, um die Schalter so zu steuern, dass die Ausgangsspannung des Batteriepacks in Abhängigkeit von einer Betriebsspannung des externen Gerätes geändert wird;
eine Authentifizierungseinheit (22) mit einer Nachschlagetabelle für Widerstände und entsprechende Betriebsspannungen, wobei das externe Gerät einen voreingestellten Widerstand aufweist, der einem in der Nachschlagetabelle gespeicherten Widerstand entspricht; und
eine dritte Klemme TH, an der der voreingestellte Widerstand des externen Gerätes gemessen wird, wobei die dritte Klemme mit der Authentifizierungseinheit (22) verbunden ist;
wobei die Authentifizierungseinheit (22) angeordnet ist, um den voreingestellten Widerstand des mit der dritten Klemme TH verbundenen externen Gerätes zu messen, um die Betriebsspannung des externen Gerätes aus der Nachschlagetabelle zu bestimmen und um ein Signal an die Steuereinheit (21) zu übermitteln, um die Steuereinheit über die Betriebsspannung des externen Gerätes zu unterrichten.

2. Vorrichtung nach Anspruch 1, wobei die Schalter Transistoren umfassen, die auf Steuersignale von der Steuereinheit (21) reagieren, um die Batteriezellen selektiv mit den Ausgangsklemmen des Batteriepacks zu verbinden.

3. Vorrichtung nach Anspruch 1, wobei das Batteriepack ferner einen ersten Kondensator C1 umfasst, der zwischen die erste und zweite Batteriezelle geschaltet ist.

4. Vorrichtung nach Anspruch 3, wobei einer der Schalter einen Schalter T2 zur Umgehung des Kondensators C1 umfasst, um die erste und zweite Zelle in Reihe zu schalten.

5. Vorrichtung nach einem der vorangehenden Ansprüche, wobei die Schalter eine Schaltanordnung T1, T3 zur Verbindung der positiven Klemmen der Batteriezellen untereinander und zur Verbindung der negativen Klemmen der Batteriezellen untereinander umfassen.

6. Vorrichtung nach einem der vorangehenden Ansprüche, wobei das Batteriepack Steuermittel umfasst, die angeordnet sind, um zu bestimmen, ob die Batteriezellen überladen oder überentladen sind.

7. Vorrichtung nach Anspruch 6, wobei das Batteriepack einen zweiten Kondensator C2 umfasst, der zum Ausgang des Batteriemoduls parallel geschaltet ist, wobei die Steuermittel angeordnet sind, um die Spannung parallel zum zweiten Kondensator zu messen, um zu bestimmen, ob die Batteriezellen überladen oder überentladen sind.

8. Vorrichtung nach Anspruch 6 oder 7, wobei das Batteriepack Steuermittel (20) umfasst, die angeordnet sind, um eine Mehrzahl von Ladungs- und Entladungs-Vergleichsspannungen für jede einer Mehrzahl von Batteriezellenkonfigurationen zu speichern.

9. Vorrichtung nach Anspruch 6, 7 oder 8, wobei das Batteriepack ferner eine Schaltereinheit (23) zur selektiven Verbindung und Trennung eines Ausgangs des Batteriemoduls (10) mit bzw. von einer Batteriepackausgangsklemme in Abhängigkeit davon umfasst, ob die Batteriezellen überladen oder überentladen sind.

10. Vorrichtung nach Anspruch 9, wobei das Batteriepack ferner einen dritten Kondensator C3 umfasst, der zwischen einem Ausgang des Batteriemoduls (10) und der Ausgangsklemme des Batteriepacks geschaltet ist, wobei die Schaltereinheit angeordnet ist, um den Kondensator zu umgehen, wenn die Schaltereinheit eingeschaltet ist.

11. Vorrichtung nach einem der vorangehenden Ansprüche, wobei das Batteriepack Steuermittel umfasst, die angeordnet sind, um zu erkennen, dass das externe Gerät aus ist, und bei Erkennung, dass das externe Gerät aus ist, angeordnet sind, um die Zellen zu steuern, so dass sie für den Zellenausgleich parallel geschaltet sind.

## Revendications

1. Appareil comprenant :
un pack de batteries pour fournir une tension de sortie à des première et seconde bornes de sortie, et
un dispositif extérieur alimenté par le pack de batterie et connecté au pack de batterie, par le biais de bornes de résistance positives, négatives et préréglées,
le pack de batterie comprenant :
un module de batterie (10) comprenant une pluralité de cellules de batterie et une pluralité de commutateurs pour connecter les cellules en série et/ou en parallèle ;
une unité de commande (21) disposée de façon à commander les commutateurs afin de modifier la tension de sortie du pack de batterie en fonction d'une tension de fonctionnement du dispositif extérieur ;
une unité d'authentification (22) ayant une table de consultation des résistances et des tensions de fonctionnement correspondantes, dans lequel le dispositif extérieur a une résistance préétablie qui correspond à une résistance mémorisée dans la table de consultation ; et
une troisième borne TH à laquelle la résistance préréglée du dispositif extérieur est mesurée, la troisième borne étant connectée à l'unité d'authentification (22) ;
dans lequel l'unité d'authentification (22) est disposée de façon à mesurer la résistance préréglée du dispositif extérieur connecté à la troisième borne TH, afin de déterminer la tension de fonctionnement du dispositif extérieur à partir de la table de consultation, et de transmettre un signal à l'unité de commande (21) pour informer l'unité de commande de la tension de fonctionnement du dispositif extérieur.

2. Appareil selon la revendication 1, dans lequel les commutateurs comprennent des transistors sensibles aux signaux de commande provenant de l'unité de commande (21) afin de connecter sélectivement les cellules de batterie aux bornes de sortie du pack de batterie.

3. Appareil selon la revendication 1, dans lequel le pack de batterie comprend en outre un premier condensateur C1 connecté entre les première et seconde cellules de batterie.

4. Appareil selon la revendication 3, dans lequel un des commutateurs comprend un commutateur T2 pour contourner le premier condensateur C1, afin de connecter les première et seconde cellules en série.

5. Appareil selon l'une quelconque des revendications précédentes, dans lequel les commutateurs comprennent un dispositif de commutation T1, T3 pour connecter les bornes positives des cellules de batterie les unes aux autres et pour connecter les bornes négatives des cellules de batteries les unes aux autres.

6. Appareil selon l'une quelconque des revendications précédentes, dans lequel le pack de batterie comprend des moyens de contrôle disposés de façon à déterminer si les cellules de batterie sont trop chargées ou trop déchargées.

7. Appareil selon la revendication 6, dans lequel le pack de batterie comprend un second condensateur C2 connecté à travers la sortie du module de batterie, dans lequel les moyens de contrôle sont disposés de façon à mesurer la tension à travers le second condensateur pour déterminer si les cellules de batterie sont trop chargées ou trop déchargées.

8. Appareil selon la revendication 6 ou 7, dans lequel le pack de batterie comprend des moyens de contrôle (20) disposés de façon à stocker une pluralité de tensions de comparaison de charge et décharge pour chacune d'une pluralité de configurations de cellule de batterie.

9. Appareil selon la revendication 6, 7 ou 8, dans lequel le pack de batterie comprend en outre une unité de commutation (23) pour connecter et déconnecter sélectivement une sortie du module de batterie (10) à une borne de sortie du pack de batterie, en fonction du fait que les cellules de batteries soient trop chargées ou trop déchargées.

10. Appareil selon la revendication 9, dans lequel le pack de batterie comprend en outre un troisième condensateur C3 connecté entre une sortie du module de batterie (10) et la borne de sortie du pack de batterie, dans lequel l'unité de commutation est disposée de façon à contourner le condensateur quand l'unité de commutation est allumée.

11. Appareil selon l'une quelconque des revendications précédentes, dans lequel le pack de batterie comprend des moyens de contrôle disposés de façon à détecter que le dispositif extérieur est éteint et en détectant que le dispositif extérieur est éteint, il est disposé de façon à contrôler que les cellules sont connectées en parallèle pour l'équilibrage des cellules.
